Europäisches Patentamt

European Patent Office

Office européen des brevets

(11) Publication number: **0 159 151**
A1

# (12) EUROPEAN PATENT APPLICATION

(21) Application number: **85302017.0**

(22) Date of filing: **22.03.85**

(51) Int. Cl.⁴: **A 22 C 11/06**
**F 15 B 15/14**

(30) Priority: **24.03.84 GB 8407717**

(43) Date of publication of application:
**23.10.85 Bulletin 85/43**

(84) Designated Contracting States:
**BE DE FR IT NL**

(71) Applicant: **Mateline Automation Limited**
**Birmingham Road**
**Redditch Worcestershire B97 6DY(GB)**

(72) Inventor: **Selley, Brian Richard**
**94 Station Road**
**Wythall Birmingham 47(GB)**

(74) Representative: **Spall, Christopher John**
**BARKER, BRETTELL & DUNCAN 138 Hagley Road**
**Edgbaston Birmingham B16 9PW(GB)**

(54) Apparatus for pumping plastics materials.

(57) Simplified pumping apparatus is achieved by utilising hydraulic actuator assemblies (16, 17) comprising inner (25) and outer (26) co-axial pistons working in respective co-axial cylinders (22, 21). The outer piston (26) and its tubular rod (27) is operatively connected to the sleeve (9, 10) and is slidable over the rod (29) of the inner piston (25) which is operatively connected to the plunger (15). The outer piston (26) is double-acting and the single-acting inner piston (25) is retracted by the outer piston (26) by means of an abutment flange (38) on the inner piston rod (29) and appropriately positioned ports (35, 36, 37) for supplying hydraulic fluid to the cylinders (21, 22).

FIG 3.

Croydon Printing Company Ltd.

1

## APPARATUS FOR PUMPING PLASTICS MATERIALS

This invention relates to apparatus for pumping plastics materials such as edible food products, typically pork or other sausage meat, in a machine for producing edible products, the apparatus being of the kind comprising a pair of plungers which are alternately reciprocable to discharge into a common conduit, and each plunger operates in conjunction with a sleeve in which it is adapted to work and which, in turn, is adapted to reciprocate into and out of a loading area which has been filled with the product, the apparatus being so constructed and arranged that when a sleeve moves through the product from a retracted into an operative advanced position in which it seals against an end wall surrounding an opening leading to the conduit, a loaded pumping chamber is thereby effectively defined through which the plunger can be advanced to force the confined product into the conduit.

Apparatus of this kind will hereinafter be referred to as apparatus of the kind set forth.

The term 'plastics materials' is intended to include those food materials which are too dry to pump by suction and unsuitable for moving by means of a screw or auger owing to the distance involved.

Apparatus of the kind set forth is described in U.S. Patents Nos. 3108318, 3456285, and 4097962. In these known constructions relatively complex actuator mechanisms and control circuits are provided for operating the two plungers and the two sleeves in synchronism.

In the apparatus disclosed in U.S. 3 456 285 the principle of the pumping operation is the same as that used in the present invention but the means of achieving reciprocation of the plunger and sleeve is different. Here the plunger and sleeve of each pump unit is moved by separate ram means comprising a central ram for the plunger and three peripheral rams for the sleeve. The rams are arranged in clusters which, together with the guide rods and hydraulic lines, makes for a very complicated arrangement.

The automatic sausage stuffing machine dislcosed in U.S. 3 108 318 utilises a single hydraulic power unit for reciprocating the plunger and sleeve of each assembly but in this known arrangement the ram of the power unit is operatively connected by a very complicated linkage mechanism to both plunger and sleeve. Trip switches are operated by the linkage parts to achieve alternate extension and retraction of the pairs of cutting sleeves and feed plungers.

Apart from the complicated linkage mechanism it would appear that such mechanism is prone to wear and maintenance problems.

The apparatus disclosed in U.S. 4 097 962 is similar to that of U.S. 3 456 285 in that each sleeve is operated by a pair of ram rods and each plunger by a single ram rod. The sleeves carry further rods for operating trip switches. Similarly, the ram rods for the plungers carry further rods for switching purposes. Again the arrangement is complicated which is always a drawback from the point of view of cost and operating efficiency.

According to our invention in apparatus of the kind set forth each plunger and sleeve assembly is actuated by an hydraulic actuator assembly, and each actuator assembly comprises inner and outer co-axial pistons of which the outer piston is adapted to reciprocate the sleeve between its retracted and advanced positions and the inner piston is adapted to reciprocate the plunger in the bore of the sleeve between its retracted and advanced positions.

We therefore provide a relatively uncomplicated hydraulic actuator mechanism for the plunger and sleeve and each of the two actuator assemblies may comprise a self-contained unit for co-operation with a respective plunger and sleeve assembly.

Each self contained unit may comprise an hydraulic pump controlled by a common control circuit.

Preferably the units are mounted side-by-side on a frame on which the apparatus of the kind set forth is also mounted. The frame may be mounted on wheels or skids for mobility in use.

In one construction the outer piston and the inner piston work in respective portions of greater and smaller diameters of a common bore in a housing, the outer piston carries a first piston-rod which works through a seal in a closure for the outer end of the portion of greater diameter for co-operation with the sleeve, and the inner piston carries a second piston-rod which projects through a common axial through-bore in the outer piston and the first piston-rod for co-operation with the plunger, a seal being provided between the through-bore and the second piston-rod, and an abutment being provided between the outer piston and a shoulder on the second piston-rod to retract the plunger with the sleeve as the sleeve is retracted from its advanced position into its retracted position.

In order to simplify manufacture the housing may comprise two tubular sections having different bore diameters which are rigidly connected together by a common end fitting. Similarly, said second piston-rod may comprise two rod-parts joined end-to-end by a spigot and socket connection, and said shoulder may be provided by a separate spacing member mounted on the spigot.

The two hydraulic actuator assemblies are operated in sequence, and each actuator assembly is operated by supplying fluid in sequence to each of three ports in the wall of the housing of which first and second ports are disposed at opposite ends of the housing for supplying fluid under pressure to the outer end of the outer piston and to the outer end of the inner piston, respectively, and the third port is disposed at an intermediate point in the length of the housing to supply pressure simultaneously to opposed ends of the two pistons, the sequence of fluid supply being as follows:-

a) apply fluid from the third port to adjacent faces of the two pistons to move the outer piston relatively away from the inner piston in order to urge the sleeve into its advanced position, at the same time holding the inner piston in a retracted position;

b) cut-off the supply to the third port and then apply fluid to the second port to move the inner piston axially with respect to the outer piston to cause the plunger to force the confined product from the sleeve and into the conduit; and

c)     cut-off the supply to the second port and then apply fluid to the first port to act on the outer face of the outer piston whereby to move the outer piston into its retracted position accompanied by a corresponding movement of the inner piston due to the abutment of the outer piston with the shoulder on the second piston-rod.

Conveniently at least one of the above-mentioned ports may be provided in a separate end fitting connected to the tubular housing section.

Preferably the sequence described above is controlled by solenoid-operated hydraulic controlled valves which are operated in sequence in response to signals from a micro-switch responsive to the positions of the two sleeves, and the pressure acting on the inner piston when that piston is in its fully advanced position.

One embodiment of our invention is illustrated in the accompanying drawings in which:-

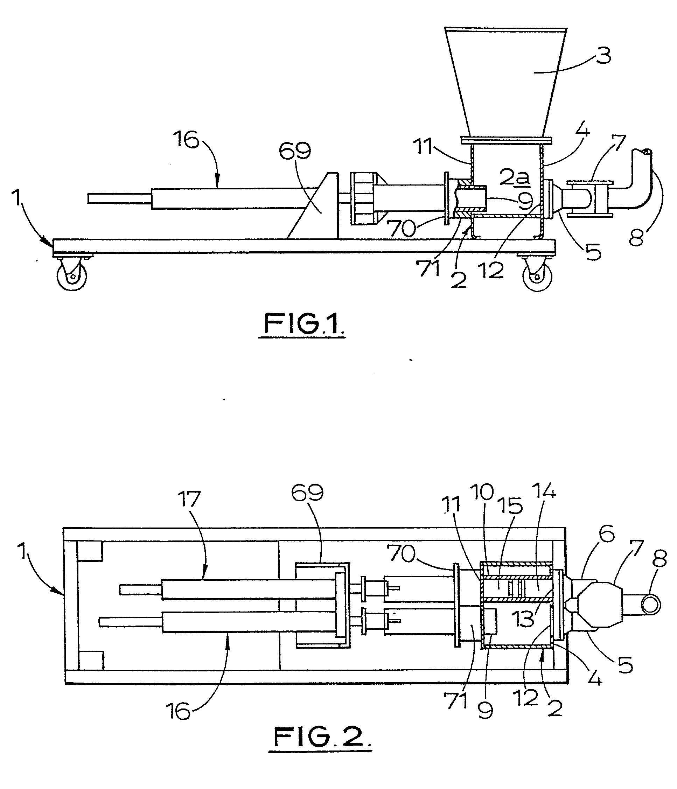

Figure 1 is a schematic, partly sectioned, side elevation through apparatus for pumping edible food products including a longitudinal section through the loading area;

Figure 2 is a schematic plan of the apparatus of Figure 1 including a transverse section through the loading area;

Figure 3 is longitudinal section through one of the two actuator assemblies incorporated in the apparatus in Figures 1 and 2; and

Figure 4 is a layout of an electro-hydraulic control circuit for the apparatus.

The apparatus illustrated in the drawings comprises a wheel mounted elongate frame 1 of skeletal outline on which is mounted an open-topped stainless steel cabinet 2 of generally rectangular section which receives food products through a hopper 3 into a loading area defined by the interior 2a of the cabinet. The outer end wall 4 of the cabinet has a pair of discharge conduits 5,6 which discharge into a common manifold 7 having a single outlet conduit 8. A suitable flapper valve (not shown) housed within the manifold 7 opens and closes the two conduits 5 and 6 alternately such that food products discharged through one conduit cannot be pumped back into the other conduit.

A pair of transversely spaced, stainless steel, cylindrical sleeves 9 and 10 are alternately reciprocal between the opposite end walls 4, 11 of the cabinet 2 between a retracted position in which their inner ends, that is the ends which extend into the cabinet, are substantially in alignment with a face of the inner end wall 11 and an advanced operative position in which the inner ends seat against seatings 12,13 of nylon or similar plastics material surrounding the inner ends of the respective conduits 5,6. When moving from the retracted into the advanced position each sleeve 9,10 moves through the food product disposed in the loading area of the cabinet so that its bore which defines a pumping chamber 14 is filled with the food product from the loading area.

A feed plunger 15, of suitable plastics material, working in the bore of each sleeve 9, 10 is movable between a retracted position in which its inner end, that is the operative end which contacts the food material, is substantially aligned with the position assumed by the outer end of the respective sleeve 9,10 when the sleeve is in its advanced position, and an advanced position to force the confined product from the pumping chamber 14 and into the respective conduit 5,6.

By operating the two sleeves 9,10 and the plungers 15 alternately and in a predetermined sequence a substantially smooth pumping action can be applied to the food products for discharge through the conduit 8.

The sequence of operation of each sleeve 9,10 and its respective plunger 15 is controlled by an hydraulic actuator assembly 16,17, and the two assemblies 16 and 17, are mounted on the frame by means of a support member 69 and a yoke plate 70, to the rear of the cabinet 2, with their axes in a spaced parallel relationship. A pair of guide bushes 71 of plastics material are clamped between the plate 70 and the end wall 11 of the cabinet 2. These slidingly support the inner ends of the sleeves 9, 10.

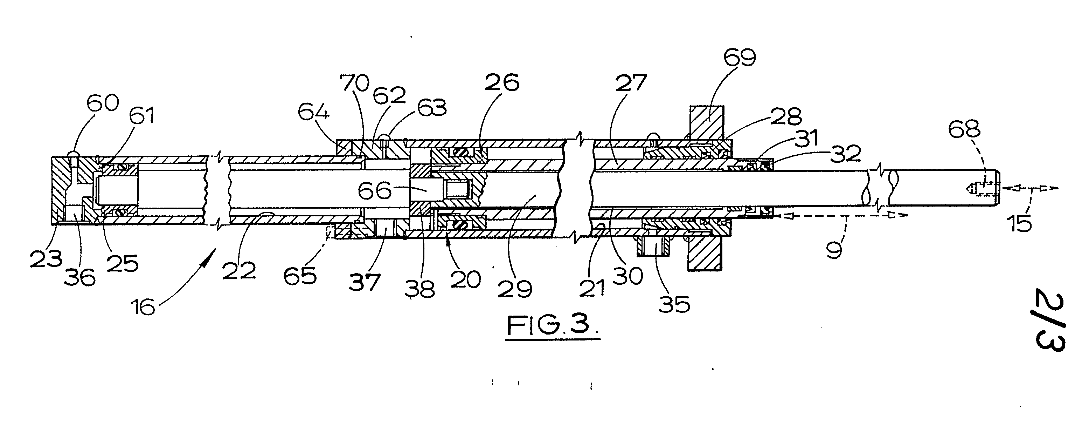

The two actuator assemblies 16,17 are identical in construction and one assembly 16 is shown in detail in Figure 3.

Each assembly 16,17 comprises a cylindrical housing 20 having an internal longitudinally extending bore of stepped outline of which a bore portion 21 of greater diameter is located adjacent to the cabinet 2, and a bore portion 22 of smaller diameter is closed at its outer end remote from the cabinet 2 by means of a plug 23. The plug comprises an inlet port 36 for hydraulic fluid and a bleed point 60. An end part of the plug within the bore portion 22 is formed as an annular

8

abutment 61 for a piston 25 carried on one end of a two-part piston rod 29. The rod 29 also slidingly supports a coaxial piston 26 with its tubular rod 27.

The two-part piston rod 29 is made up from two rod parts of substantially equal diameter one of which is formed with a screw threaded cylindrical end spigot 66 and the other with a complementary screw threaded bore providing a screwed connection for the two rod parts. An annular spacing member 38 is mounted on the spigot 66 trapped between the two co-axially joined parts. In operation the spacing member provides an abutment for the piston 26 and also allows the inner face of the piston 26 to be exposed to fluid pressure to drive the piston in one direction, as will be described below.

The two pistons 25, 26, are secured to the ends of respective piston rods 29, 27 by any suitable means such as screw threads or welding. The inner piston 25 is single acting and the outer piston 26 double acting. The two pistons work in the bore portions 22 and 21 respectively. The tubular piston rod 27 of the outer piston 26 works through a sealing closure 28 for the outer end of the bore portion 21 and is coupled at its free end to a respective one of the sleeves 9,10 as indicated by the double headed arrow 9. The two-part piston rod 29 of the inner piston 25 is of substantial length and projects from the housing 20 through a common open-ended longitudinal bore 30 passing through the outer piston 26 and the piston-rod 27 and works through axially spaced seals 31,32 at the free end of the piston rod 27. The free end 68 of the piston rod 29 is coupled to the plunger 15 which works in the bore of the sleeve 9,10 as indicated by the double headed arrow 15. The end of piston-rod 27 is coupled to the sleeve 9, 10 by means of a releasable coupling (not shown) achieved through radial lugs or an annular flange on the end of the sleeve. The free end 68 of the piston rod 29 is releasably coupled to the plunger 15 by means of a pin and socket arrangement (not shown).

For convenience of manufacture the housing 20 is made up from two tube portions of different diameters. The tube portion 21 of larger diameter is welded to a tubular end fitting 62 which comprises an inlet port 37 for hydraulic fluid and a bleed point 63. The tube portion 22 is secured co-axially in a recess in the end fitting 62 by means of a retaining flange 64 welded to the tube adjacent to its inner end and screw means 65. A seal 70 is provided between the end of tube portion 22 and the end fitting 62.

The housing 20 is provided with three radial inlet ports 35,36 and 37 of which the ports 35 and 36 are provided at the opposite end of the housing 20 to admit hydraulic fluid under pressure into the two respective bore portions 21 and 22 adjacent to their outer ends, and the third port 37 is positioned between opposed ends of the two pistons 25,26, irrespective of the relative positions of the two pistons 25,26 in the bore portions 22,21.

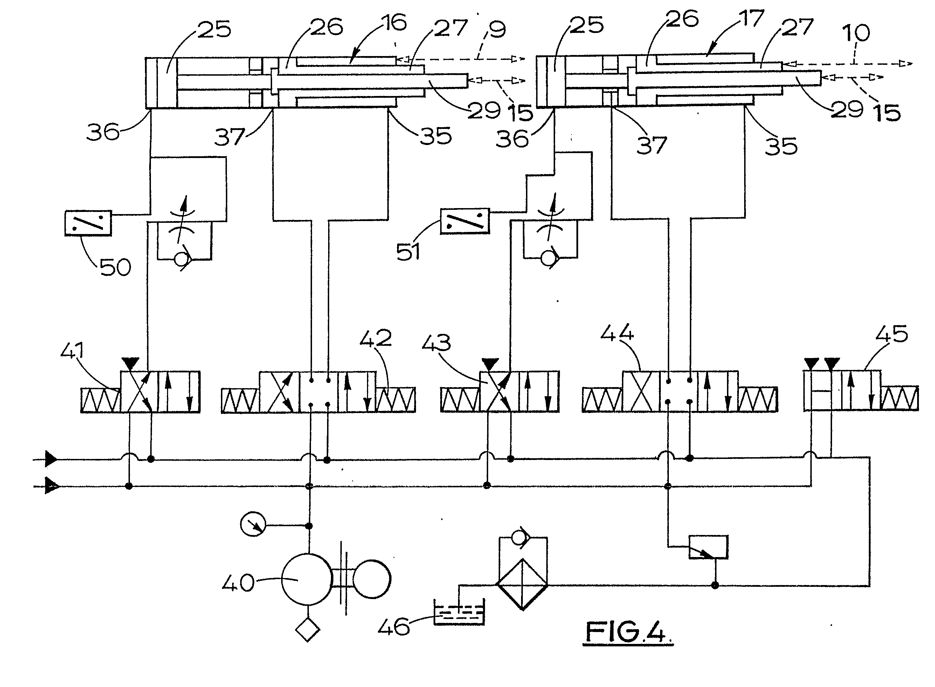

In the inoperative retracted position of the actuators 16, 17 shown in Figures 3 and 4 in which the operatively connected cutting sleeves 9,10 and the feed plungers 15 are also retracted, the outer piston 26 abuts against the spacing member 38 on the piston-rod 29 to retain the inner piston 25 in a retracted position defined by an engagement with the annular abutment 61 on the plug 23.

The two actuator assemblies 16,17 are alternately actuated in a predetermined sequence, and each assembly operates as follows. Commencing with the components in the retracted positions shown in Figure 3 and 4 and the sleeve 9,10 and the plunger 15 in equivalent retracted positions, fluid under pressure is first applied to the port 37. This acts simultaneously on the opposed faces of the two pistons 25, 26 to hold the inner piston 25 in its retracted position and advance the outer piston 26 in the bore portion 21, in turn to urge sleeve 9,10 through the food product in the loading area 2a of the cabinet 2 and into its advanced position in contact with the seating 12, 13 to define the pumping chamber 14 as described above. The pressure applied to the third port 37 is then cut-off and pressure is applied to the port 36 which acts on the inner piston 25 to urge the piston rod 29 together with its respective plunger 15 into their advanced positions with the plunger 15 displacing the product from the pumping chamber 14, through the conduit 5,6 and the manifold 7 into the conduit 8. In this position the spacing member 38 is substantially in abutment with the piston 26 at the cabinet end of the bore portion 21. Finally the pressure applied to the port 36 is cut-off and fluid pressure is then applied to the port 35 which acts on the outer end of the piston 26 to return that piston to its retracted position accompanied by an equivalent movement of the inner piston 25 due to the engagement of the piston 26 with the spacing member 38 on the piston rod 29. Thus a much simplified action is achieved by using co-axial pistons with the double acting outer piston 26 driving the single acting inner piston 25 in one direction.

The sequence of operations described above is controlled by an electro-hydraulic control circuit illustrated in Figure 4 of the drawings. High pressure hydraulic fluid from a pump 40 is applied to the two actuator assemblies 16,17 through two pairs of solenoid-operated control valves 41,42 and 43,44 respectively and the relative sequences of operation between the two assemblies 16,17 is regulated by a further solenoid-operated valve 45. Fluid from the hydraulic circuits is returned to a reservoir 46 on which the pump 40 draws fluid.

The operation of the sequence is as follows. A master electrical switch (not shown) is operated to energise the control circuit and the solenoid-operated valve 42 is then operative to supply fluid to the port 37 of the actuator assembly 16 with the solenoid-operated valve 44 operative to supply fluid to the port 35 of the other actuator assembly 17. This urges the sleeve 9 controlled by the actuator assembly 16 into its operative advanced position, and urges the sleeve 10, and the plunger 15 operated by the actuator assembly 17, into their retracted positions.

As the sleeve 9 engages with its seating 12 in the end wall 4 of the chamber 2 at the end of its stroke it is also operative to actuate a micro-switch (not shown). This sends an electrical signal to the two solenoid-operated valves 41 and 42 to cut-off the supply to the port 37 and apply fluid to the port 36 of the actuator assembly 16, and to the two solenoid-operated valves 43,44 to cut-off the supply of fluid to the port 35 of the actuator assembly 17 and apply fluid to the port 37 in order to urge the sleeve 10 towards its advanced position.

As the feed plunger 15 operated by the actuator assembly 16 reaches its advanced position the pressure applied to the piston 25 attains a predetermined value at which a pressure switch 50 is operated to actuate the solenoid-operated valve 41 to cut-off the supply to the port 36 and actuate the solenoid-operated valve 42 to apply fluid under pressure to the port 35 in order to retract the sleeve 9 and the plunger 15 as described above.

At the same time a similar sequence is applied to the actuator assembly 17 with a micro-switch operated by the sleeve 10 in its advanced position. The micro-switch is operative to energise the solenoid-operated valves 43,44 in sequence in order the advance the plunger 15 controlled by the piston 25 until a pressure switch 51 responsive to pressure applied to the piston 25 is operative to act in a similar manner to the pressure switch 50.

The apparatus described above can be used in any particular role in the manufacture of edible products. For example, it could be used to measure the quantity of food material supplied to a machine in an automated process. However, the primary use of the apparatus is as a pump to elevate food products from a level close to the ground to the substantial height of a hopper of a depositor in a meat-pie making apparatus. This facilitates the manufacturing process and assists the operator considerably in loading the depositor with food stuffs.

The pump described above is particularly suitable for use with pork or other sausage meat since relatively solid particles can be transferred from a lower level to a higher level substantially without destruction or immulsification of the solid particles.

13

In one modified form of the apparatus (not shown) each actuator assembly functions as a self contained unit and is supplied by a separate hydraulic pump in order to ensure that sufficient power in available whatever the consistency of the plastics food material being pumped, or alternatively twin pumps may be linked into a common hydraulic circuit.

In the apparatus described in accordance with this invention the feed plungers are of plastics material such as nylon and the sleeves of stainless steel. It will be appreciated that this combination of materials could be reversed, if desired, or both parts could be of the same material.

14

## CLAIMS

1. Apparatus for pumping plastics materials such as edible food products, typically pork or other sausage meat, in a machine for producing edible products, the apparatus being of the kind comprising a pair of plungers (15) which are alternately reciprocable to discharge into a common conduit (8), and each plunger operates in conjunction with a sleeve (9, 10) in which it is adapted to work and which, in turn, is adapted to reciprocate into and out of a loading area (2a) which has been filled with the product, the apparatus being so constructed and arranged that when a sleeve (9, 10) moves through the product from a retracted into an operative advanced position in which it seals against an end wall (12, 13) surrounding an opening leading to the conduit (8), a loaded pumping chamber (14) is thereby effectively defined through which the plunger (15) can be advanced to force the confined product into the conduit, characterised in that each plunger (15) and sleeve assembly (9, 10) is actuated sequentially by an hydraulic actuator assembly (16, 17), and each actuator assembly (16, 17) comprises inner (25) and outer (26) co-axial pistons of which the outer piston (26) is adapted to reciprocate the sleeve (9, 10) between its retracted and advanced positions and the inner piston (25) is adapted to reciprocate the plunger (15) in the bore of the sleeve between its retracted and advanced positions.

2. Apparatus as claimed in claim 1, wherein each of the two actuator assemblies (16, 17) comprises a self-contained unit for co-operation with a respective plunger (15) and sleeve assembly (9, 10).

3.    Apparatus as claimed in claim 2, wherein the actuator units (16, 17) are mounted side-by-side on a frame (1) together with other parts comprising the apparatus of the kind set forth.

4.    Apparatus as claimed in any of claims 1 to 3, wherein the outer piston (26) and the inner piston (25) work in respective portions (21, 22) of greater and smaller diameters of a common bore in a housing (20), the outer piston (26) carriers a first piston-rod (27) which works through a seal (28) in a closure for the outer end of the portion (21) of greater diameter for operative co-operation with the sleeve (9, 10), and the inner piston (25) carriers a second piston-rod (29) which projects through a common axial through-bore (30) in the outer piston (26) and the first piston-rod (27) for co-operation with the plunger (15).

5.    Apparatus as claimed in claim 4, wherein a seal (31) is provided between the through-bore (30) and the second piston-rod (29), and an abutment is provided between the outer piston (26) and a shoulder (38) on the second piston-rod (29) to retract the plunger (15) with the sleeve (9, 10) as the sleeve is retracted from its advanced position into its retracted position.

6.    Apparatus as claimed in claim 4 or claim 5, wherein three ports (35, 36, 37) are provided in the wall (21, 22) of the housing (20) and each actuator assembly (16, 17) is operated by supplying fluid in sequence to each of the three ports (35, 36, 37) of which first (35) and second (36) ports are disposed at opposite ends of the housing (20) for supplying fluid under pressure to the outer end of the outer piston (26) and to the outer end of the inner piston (25), respectively, and the third port (37) is disposed at an intermediate point in the length of the housing (20) to supply pressure simultaneously to opposed ends of the two pistons (25, 26).

7. Apparatus as claimed in claim 6, wherein the housing (20) comprises two tubular sections (21, 22) rigidly connected together by an end fitting (62) comprising said third port (37).

8. Apparatus as claimed in claim 6 or claim 7, wherein the free end of the housing section (22) of smaller diameter terminates in an end fitting (23) comprising said second port (36).

9. Apparatus as claimed in any preceding claim, wherein the sequence of operation is controlled by solenoid-operated hydraulically controlled valves (41, 42, 43, 44, 45) which are operated in sequence in response to signals from a micro-switch (not shown) responsive to the positions of the two sleeves (9, 10), and the pressure acting on the inner piston (26) when that piston is in its fully advanced position.

10. Apparatus as claimed in any of claims 5 to 9, wherein the second piston rod (29) comprises two rod-parts joined end to end by a spigot (66) and socket connection and wherein said shoulder is provided by a spacing member (38) mounted on said spigot (66).

FIG.1.

FIG.2.

0159151

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-3 456 285 (MILLER)<br><br>* Claims 1,4,8; column 2, line 64 - column 3, line 27; column 4, line 67 - column 5, line 24; figures 8,10 * | 1-3,5, 6 | A 22 C 11/06<br>F 15 B 15/14 |
| A | | 9 | |
| Y | FR-A-1 124 969 (ROLLS-ROYCE)<br><br>* Page 2, left-hand column, line 47 - right-hand column, line 57; figures 1-4 * | 1-3,5, 6 | |
| A | GB-A- 911 709 (JAMES)<br>* Figure 1 * | 4-7 | |
| A | GB-A-2 075 459 (UNION CARBIDE)<br>* Claims 1,3,4; page 5, lines 94-102 * | 1 | TECHNICAL FIELDS SEARCHED (Int. Cl.4)<br><br>A 22 C<br>F 15 B |
| A | DE-B-2 701 322 (DINGLER)<br><br>* Figure 1 * | 1,2,6, 8 | |
| A,D | US-A-3 108 318 (MILLER)<br>* Claims 3-7; figure 16 * | 1-3 | |

-/-

The present search report has been drawn up for all claims

| Place of search | Date of completion of the search | Examiner |
|---|---|---|
| THE HAGUE | 27-06-1985 | MEINDERS H. |

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A,D | US-A-4 097 962  (ALLEY & WHITE) <br> * Claims 1-3; column 2, line 59 - column 3, line 20; column 4, line 67 - column 5, line 30 * <br><br> ----- | 1-3 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 27-06-1985 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82